# EUROPÄISCHE PATENTSCHRIFT

(11) **EP 3 138 170 B1**
(45) Veröffentlichungstag und Bekanntmachung des Hinweises auf die Patenterteilung: **23.10.2019**
(21) Anmeldenummer: 15718857.4
(22) Anmeldetag: 23.04.2015
(51) Int. Cl.: H02H 3/05, H02H 3/08, H02J 9/00, H02M 1/16

(54) **ENERGIEVERSORGUNGSGERÄT**
POWER SUPPLY UNIT
APPAREIL D'ALIMENTATION EN ÉNERGIE

(30) Priorität: 28.04.2014 DE 102014105915
(43) Veröffentlichungstag der Anmeldung: 08.03.2017
(73) Patentinhaber: Phoenix Contact GmbH & Co. KG, 32825 Blomberg (DE)
(72) Erfinder: HENKEL, Hartmut, 32825 Blomberg (DE); ZEUCH, Jochen, 32825 Blomberg (DE); SCHWEER, Patrick, 31785 Hameln (DE)
(74) Vertreter: Patentship Patentanwaltsgesellschaft mbH
(86) Internationale Anmeldenummer: PCT/EP2015/058751
(87) Internationale Veröffentlichungsnummer: WO 2015/165788

(56) Entgegenhaltungen:
- EP-A1- 1 852 951
- WO-A1-2010/110940
- WO-A1-2013/167199
- GB-A- 2 012 128
- US-B1- 6 320 766

## Beschreibung

Die vorliegende Erfindung betrifft ein Energieversorgungsgerät.

Ein Energieversorgungsgerät, wie ein Spannungsversorgungsgerät, zum Versorgen eines Verbrauchers mit elektrischer Energie umfasst häufig ein Schutzelement, wie eine Schmelzsicherung oder einen Leitungsschutzschalter mit elektromagnetischer Auslösung. Das Schutzelement kann ausgebildet sein, eine elektrisch leitende Verbindung zwischen dem Energieversorgungsgerät und dem Verbraucher zu trennen, wenn ein elektrischer Strom, welcher durch das Schutzelement fließt, einen vorbestimmten Amplitudenschwellwert überschreitet. Beispielsweise erhöht sich der elektrische Strom aufgrund eines Kurzschlusses in dem Verbraucher. Durch das Trennen der elektrisch leitenden Verbindung kann eine Überlastung des Energieversorgungsgerätes und eine Überhitzung von Anschlussleitungen zwischen dem Energieversorgungsgerät und dem Verbraucher vermieden werden.

Der zum Trennen der elektrisch leitenden Verbindung zwischen dem Energieversorgungsgerät und dem Verbraucher kurzzeitig benötigte hohe elektrische Strom wird häufig zumindest teilweise durch eine einem Ausgang des Energieversorgungsgerätes parallelgeschaltete Kapazität, wie einen Kondensator, bereitgestellt. Häufig entlädt sich die Kapazität im Falle eines Kurzschlusses in dem Verbraucher mit einem schwer kontrollierbaren hohen Entladestrom. Hierdurch können die Anschlussleitungen zwischen dem Energieversorgungsgerät und dem Verbraucher überhitzen. Ferner kann ein in Reihe mit dem Verbraucher geschalteter weiterer Verbraucher beschädigt werden. Des Weiteren ist die Zeitdauer, in welcher der Entladestrom der Kapazität fließen kann, durch die Dimensionierung der Kapazität, den Leitungswiderstand der Anschlussleitungen und den Kurzschlusswiderstand des Verbrauchers vorgegeben.

Die Druckschrift GB 2 012 128 A, die den Oberbegriff des Anspruchs 1 bildet, offenbart einen Schaltkreis zum Auslösen einer Sicherung zum Schutz von miteinander parallel verschalteten Schaltkreisen, die von einem Inverter gespeist werden. Der Schaltkreis umfasst eine Batterie, welche mit einem Inverter verbunden ist. Hierbei weist der Inverter eine Arbeitsausgang mit einer relativ hohen internen Impedanz und einen Hilfsausgang mit einer substantiell niedrigeren Impedanz auf.

Dem Inverter ist ein Schaltmittel mit einem Ausgang nachgeschaltet, mittels welchem eine an dem Ausgang angeschlossene Versorgungsleitung mit dem Arbeitsausgang oder dem Hilfsausgang verbunden werden kann. Ferner ist die Versorgungsleitung mit einer Mehrzahl von parallel geschalteten Schaltkreisen verbunden, welchen jeweils eine Sicherung vorgeschaltet ist. Demnach ist ein Energieversorgungsgerät, gebildet durch die Batterie, den Inverter, das Schaltmittel und die Sicherung, offenbart, wobei eine Sicherung dem Ausgang des Energieversorgungsgerätes nachgeschaltet ist.

Ferner kann mittels eines Erfassungsmittels ein Störzustand durch Erfassen eines überhöhten Stroms durch den Ausgang festgestellt werden. Ansprechend auf Erfassen eines Störzustandes in dem Schaltkreis kann das Schaltmittel die Versorgungsleitung mit dem Hilfsausgang verbinden, um ein Auslösen der Sicherung zu erreichen. Das Auslösen der Sicherung kann dadurch erreicht werden, dass aufgrund der im Vergleich zu der Impedanz des Hauptausgangs niedrigeren Impedanz des Hilfsausgangs ein größerer Strom durch den Ausgang fließt.

Eine Amplitudenreduzierung der Ausgangsspannung des Energieversorgungsgeräts bei Erfassen eines überhöhten Stroms durch den Ausgang ist nicht vorgesehen. Durch eine Reduzierung der Impedanz eines Ausgangs eines Energieversorgungsgerätes und damit der Quellimpedanz des Energieversorgungsgerätes wird der Amplitudenwert der an dem Ausgang des Energieversorgungsgerätes ausgegebenen Ausgangsspannung erhöht.

Es ist die der Erfindung zugrundeliegende Aufgabe, ein effizientes Konzept zum Auslösen eines Schutzelements eines Energieversorgungsgerätes anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Energieversorgungsgerät gelöst, mit: einem Ausgang zum Ausgeben eines Ausgangsstroms und einer Ausgangsspannung; und einem Schutzelement mit einem Signalausgabepfad, wobei das Schutzelement dem Ausgang nachgeschaltet und ausgebildet ist, bei Überschreitung eines ersten Amplitudenschwellwertes durch den Ausgangsstrom den Signalausgabepfad aufrechtzuerhalten und bei Überschreitung eines zweiten Amplitudenschwellwertes durch den Ausgangsstrom den Signalausgabepfad zu unterbrechen, wobei der zweite Amplitudenschwellwert höher als der erste Amplitudenschwellwert ist; wobei das Energieversorgungsgerät ausgebildet ist, bei Überschreitung des ersten Amplitudenschwellwertes durch den Ausgangsstrom eine Amplitude der Ausgangsspannung zu reduzieren und eine Amplitude des Ausgangsstroms über den zweiten Amplitudenschwellwert zu erhöhen, um den Signalausgabepfad zu unterbrechen. Dadurch wird der Vorteil erreicht, dass die Amplitude des zum Unterbrechen des Signalausgabepfades verwendeten Ausgangsstroms auf effiziente Weise begrenzt werden kann.

Das Energieversorgungsgerät kann ein elektrisches Energieversorgungsgerät, wie ein Spannungsversorgungsgerät oder ein Stromversorgungsgerät, sein. Ferner kann das Energieversorgungsgerät eine Erfassungseinrichtung zum Erfassen der Amplitude der Ausgangsspannung und/oder eine Steuereinrichtung zum Einstellen der Amplitude des Ausgangsstroms und/oder der Amplitude der Ausgangsspannung umfassen. Beispielsweise umfasst das Energieversorgungsgerät einen Mikrocontroller, in welchem die Erfassungseinrichtung und/oder die Steuereinrichtung integriert sind, und welcher ferner zum Erkennen des Überschreitens des ersten Amplitudenschwellwertes durch die erfasste Amplitude des Ausgangsstroms ausgebildet ist.

Das Schutzelement kann eine Schmelzsicherung, einen Leitungsschutzschalter, beispielsweise einen Leitungsschutzschalter mit elektromagnetischer Auslösung, eine Schmelzsicherung und/oder einen Kaltleiter-Widerstand umfassen.

Der erste Amplitudenschwellwert des Ausgangsstroms kann ein in einem Speicher des Energieversorgungsgerätes vorgespeicherter erster Schwellwert sein. Beispielsweise beträgt der erste Schwellwert 0,01A, 0,1A, 1A, 3A, 5A, 6A, 8A, 10A, 12A, 16A, 20A, 30A, 40A, 50A, 75A, 100A oder 200A. Ferner kann der zweite Amplitudenschwellwert des Ausgangsstroms ein in dem Speicher des Energieversorgungsgerätes vorgespeicherter zweiter Schwellwert sein. Beispielsweise beträgt der zweite Schwellwert 0,01A, 0,1A, 1A, 3A, 5A, 6A, 8A, 10A, 12A, 16A, 20A, 30A, 40A, 50A, 75A, 100A oder 200A. Der zweite Amplitudenschwellwert des Ausgangsstroms kann dem Zweifachen, dem Dreifachen, dem Vierfachen, dem Fünffachen, dem Sechsfachen, dem Siebenfachen, dem Achtfachen, dem Neunfachen oder dem Zehnfachen der Amplitude des nominalen Ausgangsstroms des Energieversorgungsgeräts entsprechen. Die Amplitude der Ausgangsspannung kann 0,001V, 0,01V, 0,1V, 1V, 5V, 10V, 12V, 15V, 20V, 24V, 30V, 40V, 50V, 75V, 100V, 250V, 500V oder 1000V betragen.

In einer vorteilhaften Ausführungsform des Energieversorgungsgerätes ist das Energieversorgungsgerät ausgebildet, die Amplitude der Ausgangsspannung nach der Reduktion zu erhöhen, wenn die Amplitude des Ausgangsstroms nach Ablauf einer vorbestimmten Zeitspanne einen dritten Amplitudenschwellwert unterschreitet. Dadurch wird der Vorteil erreicht, dass das Energieversorgungsgerät nach Unterbrechen des Signalausgabepfades des Schutzelementes einen parallel zu dem Schutzelement geschalteten weiteren Verbraucher weiter mit elektrischer Energie versorgen kann.

Die vorbestimmte Zeitspanne kann 0,1ms, 0,5ms, 1ms, 2ms, 3ms, 4ms, 5ms, 6ms, 7ms, 8ms, 9ms, 10ms, 11ms, 12ms, 13ms, 14ms, 15ms, 20ms, 25ms, 30ms, 40ms oder 50ms betragen. Ferner kann die Erhöhung der Amplitude des Ausgangsstroms für die vorbestimmte Zeitspanne einer Kurzzeitstromüberhöhung entsprechen. Der dritte Amplitudenschwellwert des Ausgangsstroms kann ein in dem Speicher des Energieversorgungsgerätes vorgespeicherter dritter Schwellwert sein. Beispielsweise beträgt der dritte Schwellwert 0,01A, 0,1A, 1A, 3A, 5A, 6A, 8A, 10A, 12A, 16A, 20A, 30A, 40A, 50A, 75A, 100A oder 200A. Ferner kann der dritte Amplitudenschwellwert kleiner als der zweite Amplitudenschwellwert sein.

In einer weiteren vorteilhaften Ausführungsform des Energieversorgungsgerätes ist das Energieversorgungsgerät ausgebildet, die Amplitude der Ausgangsspannung erneut zu reduzieren, wenn die Amplitude des Ausgangsstroms nach Ablauf der vorbestimmten Zeitspanne den dritten Amplitudenschwellwert überschreitet. Dadurch wird der Vorteil erreicht, dass die elektrische Ausgangsleistung des Energieversorgungsgerätes reduziert werden kann, wenn der Signalausgabepfad nicht unterbrochen wird.

Das Energieversorgungsgerät kann die Amplitude der Ausgangsspannung derart reduzieren, dass sich ein vorbestimmter Kurzschlussstrom des Energieversorgungsgerätes einstellt.

In einer weiteren vorteilhaften Ausführungsform des Energieversorgungsgerätes ist das Energieversorgungsgerät ausgebildet, die Amplitude des Ausgangstroms nach Ablauf einer weiteren vorbestimmten Zeitspanne erneut über den zweiten Amplitudenschwellwert zu erhöhen, wenn der Signalausgabepfad nicht unterbrochen wurde. Dadurch wird der Vorteil erreicht, dass ein erneuter Versuch zum Unterbrechen des Signalausgabepfades unternommen werden kann.

Die weitere vorbestimmte Zeitspanne kann eine Abkühlzeit zum Abkühlen von Komponenten, wie Anschlussleitungen, sein. Ferner kann die weitere vorbestimmte Zeitspanne größer sein als die vorbestimmte Zeitspanne. Beispielsweise beträgt die weitere vorbestimmte Zeitspanne das Zehnfache, das Fünfundzwanzigfache, das Fünfzigfache, das Fünfundsiebzigfache, das Hundertfache, das Zweihundertfünfzigfache, das Fünfhundertfache oder das Tausendfache der vorbestimmten Zeitspanne.

In einer weiteren vorteilhaften Ausführungsform des Energieversorgungsgerätes ist das Energieversorgungsgerät ausgebildet mit einer Erfassungseinrichtung zum Erfassen der Amplitude des Ausgangsstroms. Dadurch wird der Vorteil erreicht, dass die Amplitude des Ausgangsstroms effizient bereitgestellt werden kann, um diese auf Überschreitung oder Unterschreitung des jeweiligen Amplitudenschwellwertes zu überprüfen.

Die Erfassungseinrichtung kann ein Strommessgerät mit einem Shunt oder einer Hall-Sonde umfassen. Ferner kann die Erfassungseinrichtung in einem Mikrocontroller des Energieversorgungsgerätes integriert sein.

In einer weiteren vorteilhaften Ausführungsform des Energieversorgungsgerätes ist das Energieversorgungsgerät ausgebildet mit einer Steuereinrichtung zum Einstellen der Amplitude des Ausgangsstroms oder der Amplitude der Ausgangsspannung. Dadurch wird der Vorteil erreicht, dass die Amplitude des Ausgangsstroms oder die Amplitude der Ausgangsspannung effizient eingestellt werden kann.

Die Steuereinrichtung kann ein elektronisch steuerbares Potentiometer zum Einstellen der Amplitude des Ausgangsstroms oder der Amplitude der Ausgangsspannung umfassen. Ferner kann die Steuereinrichtung in einem Mikrocontroller des Energieversorgungsgerätes integriert sein.

In einer weiteren vorteilhaften Ausführungsform des Energieversorgungsgerätes umfasst das Schutzelement einen Leitungsschutzschalter, insbesondere einen Leitungsschutzschalter mit elektromagnetischer Auslösung. Dadurch wird der Vorteil erreicht, dass ein effizientes Schutzelement verwendet werden kann.

Der Leitungsschutzschalter kann ein Relais oder einen Schütz zum Unterbrechen des Signalausgabepfades umfassen. Ferner kann der Leitungsschutzschalter derart ausgebildet sein, dass die Unterbrechung des Signalausgabepfades durch einen Benutzer aufgehoben werden kann. Beispielsweise umfasst der Leitungsschutzschalter hierzu einen Schalter zum Schließen des Signalausgabepfades.

In einer weiteren vorteilhaften Ausführungsform des Energieversorgungsgerätes umfasst das Schutzelement eine Schmelzsicherung. Dadurch wird der Vorteil erreicht, dass der Signalausgabepfad dauerhaft unterbrochen werden kann.

Die Schmelzsicherung kann einen Schmelzleiter umfassen, welcher schmelzbar ist, um den Signalausgabepfad dauerhaft zu unterbrechen.

In einer weiteren vorteilhaften Ausführungsform des Energieversorgungsgerätes umfasst das Schutzelement einen Kaltleiter-Widerstand. Dadurch wird der Vorteil erreicht, dass der unterbrochene Signalausgabepfad des Schutzelementes nach Ablauf einer Abkühlzeit ohne Benutzerinterkation wieder geschlossen werden kann.

Der Kaltleiter-Widerstand kann ein Positive Temperature Coefficient (PTC) Widerstand sein.

In einer weiteren vorteilhaften Ausführungsform des Energieversorgungsgerätes ist das Schutzelement in einem Gehäuse des Energieversorgungsgerätes angeordnet, und dem Schutzelement ist ein weiterer Ausgang zum Ausgeben des Ausgangsstroms und der Ausgangsspannung nachgeschaltet, wobei der Signalausgabepfad zwischen dem Ausgang und dem weiteren Ausgang angeordnet ist. Dadurch wird der Vorteil erreicht, dass das Energieversorgungsgerät eine besonders kompakte Bauform aufweisen kann.

In einer weiteren vorteilhaften Ausführungsform des Energieversorgungsgerätes ist der jeweilige Amplitudenschwellwert mittels einer Benutzerschnittstelle einstellbar oder vorgespeichert. Dadurch wird der Vorteil erreicht, dass der jeweilige Amplitudenschwellwert effizient bereitgestellt werden kann.

Der jeweilige Amplitudenschwellwert kann in einem Speicher des Energieversorgungsgerätes vorgespeichert sein. Ferner kann die Benutzerschnittstelle ein optisches Anzeigeelement, beispielsweise eine Flüssigkristallanzeige, zum Anzeigen des jeweiligen Amplitudenschwellwertes umfassen.

In einer weiteren vorteilhaften Ausführungsform des Energieversorgungsgerätes umfasst die Benutzerschnittstelle eine Kommunikationsschnittstelle oder ein Betätigungselement zum Einstellen des jeweiligen Amplitudenschwellwertes. Dadurch wird der Vorteil erreicht, dass das Energieversorgungsgerät effizient eingestellt werden kann.

Die Kommunikationsschnittstelle kann eine drahtgebundene und/oder eine drahtlose Kommunikationsschnittstelle umfassen. Beispielsweise umfasst die Kommunikationsschnittstelle eine serielle Schnittstelle, eine Schnittstelle nach dem Standard Power Management Bus (PMBus), eine Schnittstelle nach dem Standard Universal Serial Bus (USB), eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN).

Das Betätigungselement kann einen Taster, eine Tastatur, einen Drehknopf, beispielsweise zum Einstellen eines Potentiometers, und/oder einen Schalter umfassen.

Gemäß einer Ausführungsform kann die Erhöhung der Amplitude des Ausgangsstroms über den zweiten Amplitudenschwellwert bei Überschreitung des ersten Amplitudenschwellwertes durch den Ausgangsstrom mittels der Kommunikationsschnittstelle oder des Betätigungselementes abschaltbar sein.

In einer weiteren vorteilhaften Ausführungsform des Energieversorgungsgerätes ist das Energieversorgungsgerät ausgebildet, die Amplitude der Ausgangsspannung oder die Amplitude des Ausgangsstroms auf der Basis eines Amplitudenwertes einer Versorgungsspannung des Energieversorgungsgerätes einzustellen, um die elektrische Leistungsaufnahme des Energieversorgungsgerätes zu reduzieren. Dadurch wird der Vorteil erreicht, dass ein Einbrechen der Versorgungsspannung des Energieversorgungsgerätes durch die erhöhte Leistungsaufnahme des Energieversorgungsgerätes vermieden werden kann.

Beispielsweise wird die Erhöhung der Amplitude des Ausgangsstroms über den zweiten Amplitudenschwellwert bei Überschreitung des ersten Amplitudenschwellwertes durch den Ausgangsstrom zurückgenommen, wenn eine Amplitude der Versorgungsspannung einen vorbestimmten Schwellwert unterschreitet.

Gemäß einem zweiten Aspekt der Erfindung wird die Aufgabe durch ein Verfahren zum Versorgen eines Verbrauchers mit elektrischer Energie mittels eines Energieversorgungsgerätes gelöst, wobei einem Ausgang des Energieversorgungsgerätes zum Ausgeben eines Ausgangsstroms und einer Ausgangsspannung ein Schutzelement mit einem Signalausgabepfad nachgeschaltet ist, wobei das Schutzelement ausgebildet ist, bei Überschreitung eines ersten Amplitudenschwellwertes durch den Ausgangsstrom den Signalausgabepfad aufrechtzuerhalten und bei Überschreitung eines zweiten Amplitudenschwellwertes durch den Ausgangsstrom den Signalausgabepfad zu unterbrechen, wobei der zweite Amplitudenschwellwert höher als der erste Amplitudenschwellwert ist, mit: Erfassen einer Amplitude des Ausgangsstroms; und Reduzieren einer Amplitude der Ausgangsspannung und Erhöhen der Amplitude des Ausgangsstroms über den zweiten Amplitudenschwellwert bei Überschreitung des ersten Amplitudenschwellwertes durch den Ausgangsstrom, um den Signalausgabepfad zu unterbrechen. Dadurch wird der Vorteil erreicht, dass die Amplitude des zum Unterbrechen des Signalausgabepfades verwendeten Ausgangsstroms auf effiziente Weise begrenzt werden kann.

Der erste Amplitudenschwellwert des Ausgangsstroms kann ein in einem Speicher des Energieversorgungsgerätes vorgespeicherter erster Schwellwert sein. Beispielsweise beträgt der erste Schwellwert 0,01A, 0,1A, 1A, 3A, 5A, 6A, 8A, 10A, 12A, 16A, 20A, 30A, 40A, 50A, 75A, 100A oder 200A. Ferner kann der zweite Amplitudenschwellwert des Ausgangsstroms ein in dem Speicher des Energieversorgungsgerätes vorgespeicherter zweiter Schwellwert sein. Beispielsweise beträgt der zweite Schwellwert 0,01A, 0,1A, 1A, 3A, 5A, 6A, 8A, 10A, 12A, 16A, 20A, 30A, 40A, 50A, 75A, 100A oder 200A. Der zweite Amplitudenschwellwert des Ausgangsstroms kann dem Zweifachen, dem Dreifachen, dem Vierfachen, dem Fünffachen, dem Sechsfachen, dem Siebenfachen, dem Achtfachen, dem Neunfachen oder dem Zehnfachen der Amplitude des nominalen Ausgangsstroms des Energieversorgungsgeräts entsprechen. Die Amplitude der Ausgangsspannung kann 0,001V, 0,01V, 0,1V, 1V, 5V, 10V, 12V, 15V, 20V, 24V, 30V, 40V, 50V, 75V, 100V, 250V, 500V oder 1000V betragen.

In einer vorteilhaften Ausführungsform des Verfahrens umfasst das Verfahren: Erhöhen der Amplitude der Ausgangsspannung, wenn die Amplitude des Ausgangsstroms nach Ablauf einer vorbestimmten Zeitspanne einen dritten Amplitudenschwellwert unterschreitet. Dadurch wird der Vorteil erreicht, dass nach Unterbrechen des Signalausgabepfades des Schutzelementes ein parallel zu dem Schutzelement geschalteter weiterer Verbraucher weiter mit elektrischer Energie versorgen kann.

Die vorbestimmte Zeitspanne kann 0,1ms, 0,5ms, 1ms, 2ms, 3ms, 4ms, 5ms, 6ms, 7ms, 8ms, 9ms, 10ms, 11ms, 12ms, 13ms, 14ms, 15ms, 20ms, 25ms, 30ms, 40ms oder 50ms betragen. Ferner kann die Erhöhung der Amplitude des Ausgangsstroms für die vorbestimmte Zeitspanne einer Kurzzeitstromüberhöhung entsprechen. Der dritte Amplitudenschwellwert des Ausgangsstroms kann ein in dem Speicher des Energieversorgungsgerätes vorgespeicherter dritter Schwellwert sein. Beispielsweise beträgt der dritte Schwellwert 0,01A, 0,1A, 1A, 3A, 5A, 6A, 8A, 10A, 12A, 16A, 20A, 30A, 40A, 50A, 75A, 100A oder 200A. Ferner kann der dritte Amplitudenschwellwert kleiner als der zweite Amplitudenschwellwert sein.

In einer weiteren vorteilhaften Ausführungsform des Verfahrens umfasst das Verfahren: erneutes Reduzieren der Amplitude der Ausgangsspannung, wenn die Amplitude des Ausgangsstroms nach Ablauf der vorbestimmten Zeitspanne den dritten Amplitudenschwellwert überschreitet. Dadurch wird der Vorteil erreicht, dass die durch das Energieversorgungsgerät abgegebene elektrische Ausgangsleistung reduziert werden kann, wenn der Signalausgabepfad nicht unterbrochen wird.

Ausführungsbeispiele der Erfindung sind in den Zeichnungen dargestellt und werden im Folgenden näher beschrieben.

Es zeigen:
- Fig. 1: ein schematisches Diagramm eines Energieversorgungsgerätes gemäß einer Ausführungsform;
- Fig. 2: ein schematisches Diagramm eines Verfahrens zum Versorgen eines Verbrauchers mit elektrischer Energie mittels eines Energieversorgungsgerätes;
- Fig. 3: eine Anordnung zum Versorgen eines Verbrauchers mit elektrischer Energie mittels eines Energieversorgungsgerätes; und
- Fig. 4: Verläufe einer Ausgangsspannung und eines Ausgangsstroms eines Energieversorgungsgerätes zum Versorgen eines Verbrauchers mit elektrischer Energie.

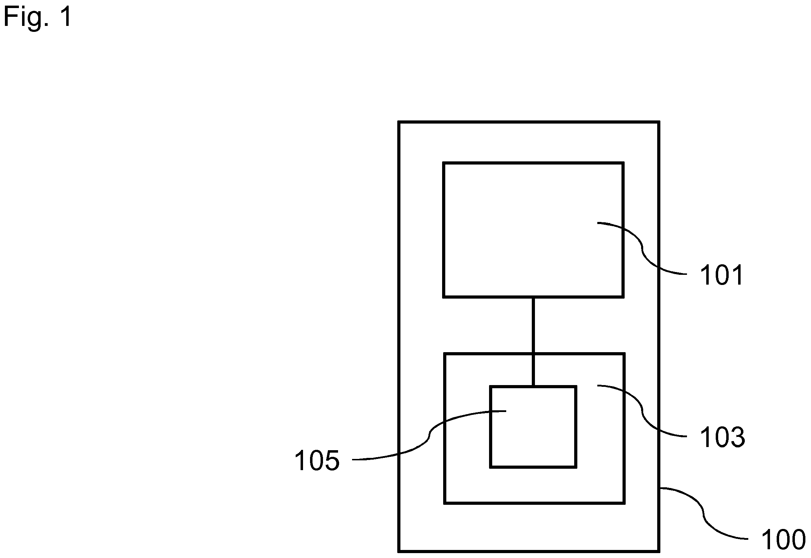

Fig. 1 zeigt ein schematisches Diagramm eines Energieversorgungsgerätes 100 gemäß einer Ausführungsform. Das Energieversorgungsgerät 100 umfasst einen Ausgang 101 und ein Schutzelement 103 mit einem Signalausgabepfad 105.

Das Energieversorgungsgerät 100 ist ausgebildet mit: dem Ausgang 101 zum Ausgeben eines Ausgangsstroms und einer Ausgangsspannung; und dem Schutzelement 103 mit dem Signalausgabepfad 105, wobei das Schutzelement 103 dem Ausgang 101 nachgeschaltet und ausgebildet ist, bei Überschreitung eines ersten Amplitudenschwellwertes durch den Ausgangsstrom den Signalausgabepfad 105 aufrechtzuerhalten und bei Überschreitung eines zweiten Amplitudenschwellwertes durch den Ausgangsstrom den Signalausgabepfad 105 zu unterbrechen, wobei der zweite Amplitudenschwellwert höher als der erste Amplitudenschwellwert ist; wobei das Energieversorgungsgerät 100 ausgebildet ist, bei Überschreitung des ersten Amplitudenschwellwertes durch den Ausgangsstrom eine Amplitude der Ausgangsspannung zu reduzieren und eine Amplitude des Ausgangsstroms über den zweiten Amplitudenschwellwert zu erhöhen, um den Signalausgabepfad 105 zu unterbrechen.

Das Energieversorgungsgerät 100 kann ein elektrisches Energieversorgungsgerät, wie ein Spannungsversorgungsgerät oder ein Stromversorgungsgerät, sein. Ferner kann das Energieversorgungsgerät 100 eine Erfassungseinrichtung zum Erfassen der Amplitude der Ausgangsspannung und/oder eine Steuereinrichtung zum Einstellen der Amplitude des Ausgangsstroms und/oder der Amplitude der Ausgangsspannung umfassen. Beispielsweise umfasst das Energieversorgungsgerät 100 einen Mikrocontroller, in welchem die Erfassungseinrichtung und/oder die Steuereinrichtung integriert sind, und welcher ferner zum Erkennen des Überschreitens des ersten Amplitudenschwellwertes durch die erfasste Amplitude des Ausgangsstroms ausgebildet ist.

Das Schutzelement 103 kann eine Schmelzsicherung, einen Leitungsschutzschalter, beispielsweise einen Leitungsschutzschalter mit elektromagnetischer Auslösung, eine Schmelzsicherung und/oder einen Kaltleiter-Widerstand umfassen.

Der erste Amplitudenschwellwert des Ausgangsstroms kann ein in einem Speicher des Energieversorgungsgerätes 100 vorgespeicherter erster Schwellwert sein. Beispielsweise beträgt der erste Schwellwert 0,01A, 0,1A, 1A, 3A, 5A, 6A, 8A, 10A, 12A, 16A, 20A, 30A, 40A, 50A, 75A, 100A oder 200A. Ferner kann der zweite Amplitudenschwellwert des Ausgangsstroms ein in dem Speicher des Energieversorgungsgerätes 100 vorgespeicherter zweiter Schwellwert sein. Beispielsweise beträgt der zweite Schwellwert 0,01A, 0,1A, 1A, 3A, 5A, 6A, 8A, 10A, 12A, 16A, 20A, 30A, 40A, 50A, 75A, 100A oder 200A. Der zweite Amplitudenschwellwert des Ausgangsstroms kann dem Zweifachen, dem Dreifachen, dem Vierfachen, dem Fünffachen, dem Sechsfachen, dem Siebenfachen, dem Achtfachen, dem Neunfachen oder dem Zehnfachen der Amplitude des nominalen Ausgangsstroms des Energieversorgungsgeräts 100 entsprechen. Die Amplitude der Ausgangsspannung kann 0,001V, 0,01V, 0,1V, 1V, 5V, 10V, 12V, 15V, 20V, 24V, 30V, 40V, 50V, 75V, 100V, 250V, 500V oder 1000V betragen.

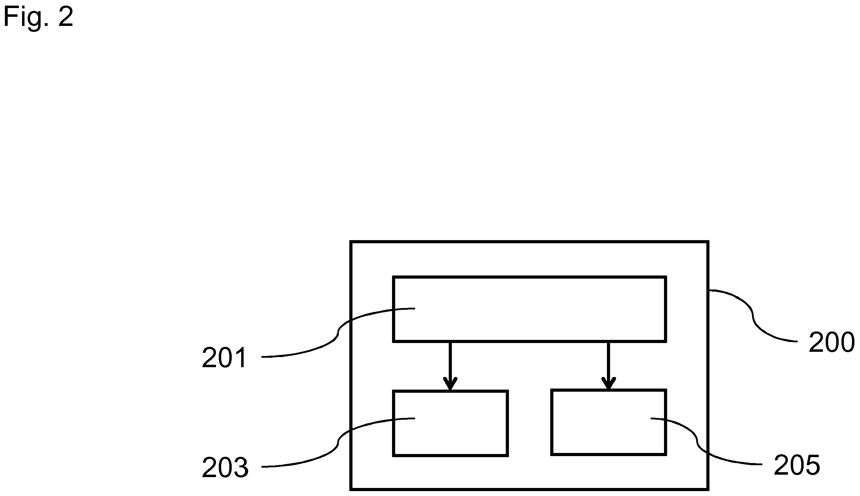

Fig. 2 zeigt ein schematisches Diagramm eines Verfahrens 200 zum Versorgen eines Verbrauchers mit elektrischer Energie mittels eines Energieversorgungsgerätes 100. Das Verfahren 200 umfasst die Verfahrensschritte eines Erfassens 201, eines Reduzierens 203 und eines Erhöhens 205.

Das Verfahren 200 zum Versorgen eines Verbrauchers mit elektrischer Energie mittels eines Energieversorgungsgerätes 100, wobei einem Ausgang 101 des Energieversorgungsgerätes 100 zum Ausgeben eines Ausgangsstroms und einer Ausgangsspannung ein Schutzelement 103 mit einem Signalausgabepfad 105 nachgeschaltet ist, wobei das Schutzelement 103 ausgebildet ist, bei Überschreitung eines ersten Amplitudenschwellwertes durch den Ausgangsstrom den Signalausgabepfad 105 aufrechtzuerhalten und bei Überschreitung eines zweiten Amplitudenschwellwertes durch den Ausgangsstrom den Signalausgabepfad 105 zu unterbrechen, wobei der zweite Amplitudenschwellwert höher als der erste Amplitudenschwellwert ist, umfasst: Erfassen 201 einer Amplitude des Ausgangsstroms; und Reduzieren 203 einer Amplitude der Ausgangsspannung und Erhöhen 205 der Amplitude des Ausgangsstroms über den zweiten Amplitudenschwellwert bei Überschreitung des ersten Amplitudenschwellwertes durch den Ausgangsstrom, um den Signalausgabepfad 105 zu unterbrechen.

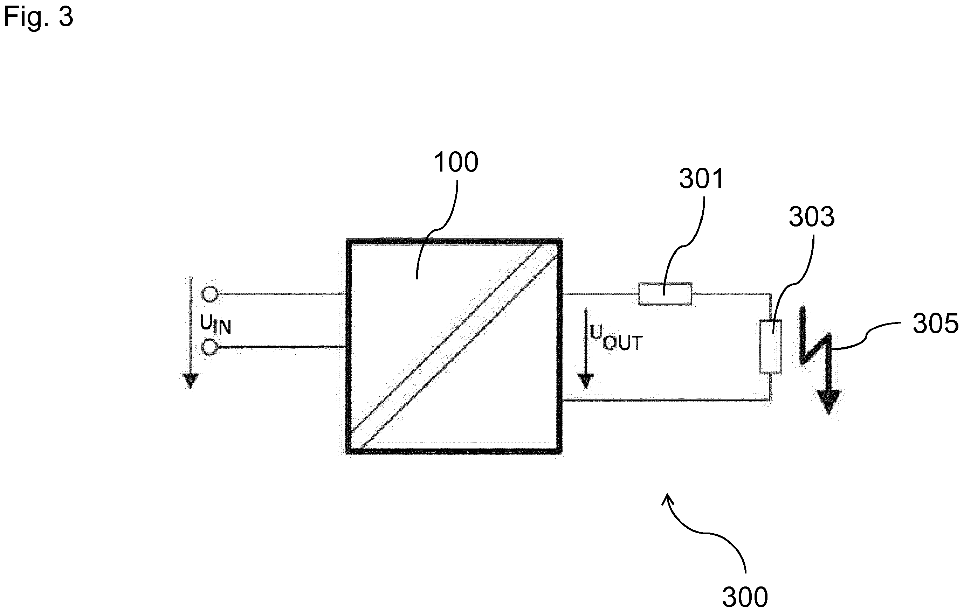

Fig. 3 zeigt eine Anordnung 300 zum Versorgen eines Verbrauchers 303 mit elektrischer Energie mittels eines Energieversorgungsgerätes 100. Ferner sind eine Versorgungsspannung U_{IN}, eine Ausgangsspannung U_{OUT}, ein Leitungswiderstand 301 und eine Fehlfunktion 305 des Verbrauchers 303 abgebildet.

Das Energieversorgungsgerät 100 wird mittels der Versorgungsspannung U_{IN} versorgt und gibt die Ausgangsspannung U_{OUT} zum Versorgen des Verbrauchers 303 aus. Bei einer Fehlfunktion 305 des Verbrauchers 303, wie einem Kurzschluss, einem Fehler oder einem Failure, kann der zur Ausgangsspannung U_{OUT} korrespondierende Ausgangsstrom durch den Leitungswiderstand 301 der elektrischen Anschlussleitung und den Kurzschlusswiderstand bzw. die Überlast des Verbrauchers 303 gegeben sein. Das Energieversorgungsgerät 100 kann bei Überschreitung des ersten Amplitudenschwellwertes durch den korrespondierenden Ausgangsstrom die Amplitude der Ausgangsspannung U_{OUT} reduzieren und eine Amplitude des korrespondierenden Ausgangsstroms über den zweiten Amplitudenschwellwert erhöhen, um den Signalausgabepfad 105 zu unterbrechen.

Der Leitungswiderstand 301 kann 1mΩ, 5mΩ, 10mΩ, 25mΩ, 50mΩ, 75mΩ, 100mΩ, 125mΩ 150mΩ, 175mΩ oder 200mΩ betragen.

Gemäß einer Ausführungsform kann eine elektrische Leistung oder Energie des Energieversorgungsgerätes 100 geregelt über einen Leistungspfad des Energieversorgungsgerätes 100 bezogen werden, anstatt die elektrische Leistung oder Energie nicht regelbaren Ausgangskondensatoren zu entnehmen. Beispielsweise wird die elektrische Leistung oder Energie direkt aus dem speisenden Netz des Energieversorgungsgerätes 100 bezogen, insbesondere mittels der Versorgungsspannung U_{IN}.

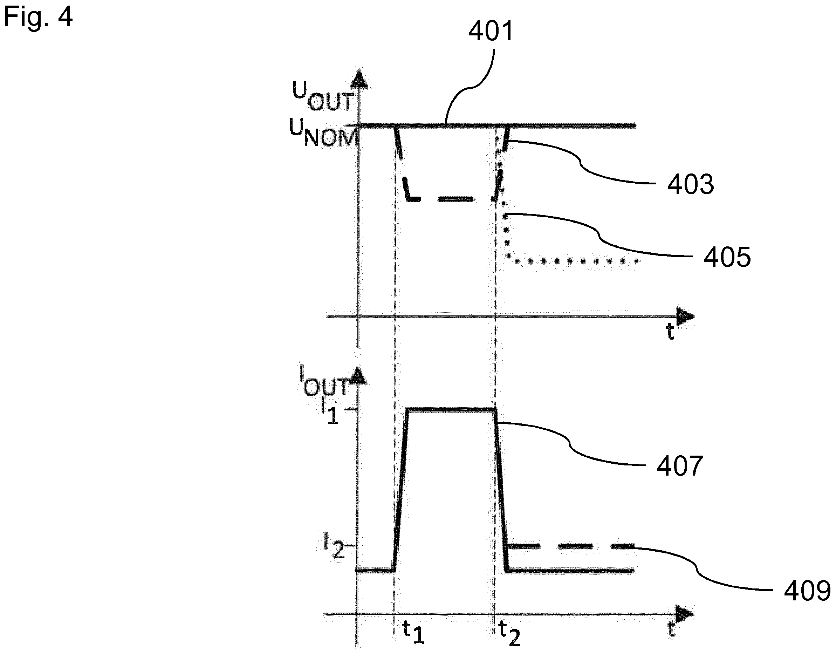

Fig. 4 zeigt Verläufe einer Ausgangsspannung U_{OUT} und eines Ausgangsstroms I_{OUT} eines Energieversorgungsgerätes 100 zum Versorgen eines Verbrauchers 303 mit elektrischer Energie. Es sind eine erster Ausgangsspannungsverlauf 401, ein zweiter Ausgangsspannungsverlauf 403 und einer dritter Ausgangsspannungsverlauf 405 der Ausgangsspannung U_{OUT} als Funktion der Zeit t abgebildet. Ferner sind ein erster Ausgangsstromverlauf 407 und ein zweiter Ausgangsstromverlauf 409 des Ausgangsstroms I_{OUT} als Funktion der Zeit abgebildet.

Bei dem ersten Ausgangsspannungsverlauf 401 ist die Ausgangsspannung U_{OUT} permanent auf eine nominale Ausgangsspannung U_{NOM} eingestellt. Ereignet sich zum ersten Zeitpunkt t₁ eine Fehlfunktion 305, wie ein Kurzschluss, in dem Verbraucher 303, so kann der Ausgangsstrom I_{OUT} dem ersten Ausgangstromverlauf 407 folgend auf einen maximalen Ausgangsstrom I₁ erhöht werden, um den Signalausgabepfad 105 zu unterbrechen. Der maximale Ausgangsstrom I₁ kann durch den Leitungswiderstand 301 der elektrischen Anschlussleitung und den Kurzschlusswiderstand bzw. die Überlast des Verbrauchers 303 begrenzt sein. Wird der Signalausgabepfad 105 zu dem zweiten Zeitpunkt t₂ unterbrochen bzw. löst ein in Reihe zum Verbraucher 303 geschaltetes Schutzelement 103, wie eine Sicherung, aus, kann der Ausgangsstrom I_{OUT} reduziert werden.

Bei dem zweiten Ausgangsspannungsverlauf 403 ist die Ausgangsspannung U_{OUT} zun Beginn auf die nominale Ausgangsspannung U_{NOM} eingestellt. Ereignet sich zum ersten Zeitpunkt t₁ eine Fehlfunktion 305, wie ein Kurzschluss, in dem Verbraucher 303, so kann der Ausgangsstrom I_{OUT} dem zweiten Ausgangstromverlauf 409 folgend auf einen maximalen Ausgangsstrom I₁ erhöht werden, um den Signalausgabepfad 105 zu unterbrechen, während die Ausgangsspannung U_{OUT} reduziert wird. Der maximale Ausgangsstrom I₁ kann durch den Leitungswiderstand 301 der elektrischen Anschlussleitung und den Kurzschlusswiderstand bzw. die Überlast des Verbrauchers 303 begrenzt sein. Wird der Signalausgabepfad 105 zu dem zweiten Zeitpunkt t₂ unterbrochen bzw. löst ein in Reihe zum Verbraucher 303 geschaltetes Schutzelement 103, wie eine Sicherung, aus, kann der Ausgangsstrom I_{OUT} auf den nominalen Ausgangsstrom I₂ reduziert und die Ausgangsspannung U_{OUT} auf die nominale Ausgangsspannung U_{NOM} erhöht werden.

Bei dem dritten Ausgangsspannungsverlauf 403 ist die Ausgangsspannung U_{OUT} zu Beginn auf die nominale Ausgangsspannung U_{NOM} eingestellt. Ereignet sich zum ersten Zeitpunkt t₁ eine Fehlfunktion 305, wie ein Kurzschluss, in dem Verbraucher 303, so kann der Ausgangsstrom I_{OUT} dem ersten Ausgangstromverlauf 407 folgend auf einen maximalen Ausgangsstrom I₁ erhöht werden, um den Signalausgabepfad 105 zu unterbrechen. Der maximale Ausgangsstrom I₁ kann durch den Leitungswiderstand 301 der elektrischen Anschlussleitung und den Kurzschlusswiderstand bzw. die Überlast des Verbrauchers 303 begrenzt sein. Wird der Signalausgabepfad 105 zu dem zweiten Zeitpunkt t₂ nicht unterbrochen bzw. löst ein in Reihe zum Verbraucher 303 geschaltetes Schutzelement 103, wie eine Sicherung, nicht aus, beispielsweise weil der maximale Ausgangsstrom I₁ kleiner ist als der zweite Amplitudenschwellwert, kann die Ausgangsspannung U_{OUT} weiter reduziert werden und es kann sich ein Kurzschlussstrom des Energieversorgungsgerätes 100 einstellen. Dies kann beispielsweise der Fall sein, wenn dem Verbraucher 303 keine oder eine zu große Sicherung vorgeschaltet ist.

Gemäß einer Ausführungsform kann das Erhöhen 205 des Ausgangsstroms I_{OUT} auf den maximalen Ausgangsstrom I₁ wiederholt durchgeführt werden, um gegebenenfalls bei einer der Wiederholungen den Signalausgabepfad 105 zu unterbrechen. Zwischen den Wiederholungen kann eine Erholungszeit, beispielsweise die weitere vorbestimmte Zeitdauer, zur Abkühlung der Komponenten vorgesehen sein.

Gemäß einer Ausführungsform können die Verläufe analog für ein Stromversorgungsgerät gelten oder angewendet werden, wenn die Begriffe Spannung und Strom getauscht werden.

Gemäß einer weiteren Ausführungsform kann sich bei einer Fehlfunktion 305 bei einem niedrigen Leitungswiderstand 301 der elektrischen Anschlussleitung und einem niedrigen Kurzschlusswiderstand bzw. einer niedrigen Überlast des Verbrauchers 303 ein hoher Ausgangsstrom I_{OUT} oder Peakstrom einstellen, wenn parallel zu dem Ausgang 101 eine Kapazität geschaltet ist. Bei einer Kurzzeitstromerhöhung mit Reduzieren 203 der Ausgangsspannung U_{OUT} kann dagegen der Ausgangsstrom I_{OUT} begrenzt werden.

Gemäß einer weiteren Ausführungsform können parallel zu dem Verbraucher 303 geschaltete normgerechte Verbraucher das Reduzieren 203 der Ausgangsspannung U_{OUT} für eine kurze Zeitspanne, beispielsweise einige Millisekunden, überbrücken. Beispielsweise fordert die Norm EN61131 für speicherprogrammierbare Steuerungen eine Zeitspanne von 10ms.

Gemäß einer weiteren Ausführungsform kann ein Leitungsschutzschalter mit magnetischer Auslösung einen dem Leitungsschutzschalter zugeordneten Signalausgabepfad innerhalb von 10ms unterbrechen bzw. innerhalb von 10ms auslösen. Damit kann ein Leitungsschutzschalter mit magnetischer Auslösung als Schutzelement für einen normgerechten Verbraucher gemäß der Norm EN61131 für speicherprogrammierbare Steuerungen verwendet werden

Gemäß einer weiteren Ausführungsform können Ausgangskondensatoren den zum Unterbrechen des Signalausgabepfades benötigten Ausgangsstrom I_{OUT} nur für eine kurze Zeitdauer liefern, insbesondere bei einem Energieversorgungsgerät 100 mit einer Ausgangsspannung U_{OUT} von 24V und einem Ausgangsstrom I_{OUT} von 20A bzw. 40A. Hierbei kann die Länge der Zeitdauer von der Größe der verbleibenden Widerstände, wie dem Leitungswiderstand 301, abhängen.

Gemäß einer weiteren Ausführungsform können aufgrund der kurzen Impulsdauer über einige Millisekunden, wie der vorbestimmten Zeitspanne, alle Bauteile in einem Leistungspfad des Energieversorgungsgerätes 100 auf die erhöhte elektrische Belastung ausgelegt sein. Dies kann aufgrund einer Betriebssicherheit und einer thermischen Kapazität erfüllt sein. Durch die wesentlich längeren Pausen, wie die weitere vorbestimmte Zeitdauer, zwischen den Pulsen bzw. dem Erhöhen 205 des Ausgangsstroms I_{OUT} ist nur eine geringe zusätzliche Erwärmung zu berücksichtigen. Ist die speisende Quelle des Energieversorgungsgerätes 100 ausgebildet, die benötigte elektrische Leistung oder Energie zu liefern und entsprechend niederohmig ausgeführt, so kann sich die benötigte Leistung oder Energie zwischen einem Netzanschluss und einem Eingangselektrolytkondensator aufteilen. Dies kann erfüllt sein, wenn die speisende Quelle durch einen Wechselspannungsanschluss für Niederspannungsnetze mit 120V oder 230V Wechselspannung gebildet ist.

Gemäß einer weiteren Ausführungsform kann aufgrund der erhöhten Leistungsaufnahme des Energieversorgungsgerätes 100 die speisende Quelle des Energieversorgungsgerätes 100 stark belastet werden. Bei einer begrenzten Quelle oder verursacht durch einen Quelleninnenwiderstand und einen Widerstand einer Zuleitung kann die Versorgungsspannung U_{IN} oder eine speisende Spannung absinken. Dieser Spannungseinbruch kann insbesondere bei einem DC/DC-Wandler dazu führen, dass eine minimale Eingangsspannung des DC/DC-Wandlers unterschritten wird und ein als DC/DC-Wandler ausgebildetes Energieversorgungsgerät 100 oder ein parallel zum Energieversorgungsgerät 100 geschalteter Verbraucher abschaltet. Um diesen Spannungseinbruch zu begrenzen, kann bei Unterschreiten eines Schwellwertes durch die Versorgungsspannung U_{IN} die von dem Energieversorgungsgerät 100 ausgegebene elektrische Leistung derart begrenzt werden, dass es zu keinem weiteren Spannungseinbruch kommt. Das Erhöhen 205 des Ausgangsstroms I_{OUT} oder die Kurzzeitstromüberhöhung kann hierzu abgebrochen werden. Ferner kann der Schwellwert oberhalb einer Abschaltschwelle des Energieversorgungsgerätes 100 liegen.

Gemäß einer weiteren Ausführungsform kann das Erhöhen 205 des Ausgangsstroms I_{OUT} oder die Kurzzeitstromüberhöhung durch einen Benutzer deaktiviert werden. Bei einer Beschaltung mit Ausgangskondensatoren kann dies nur schwer ermöglicht werden.

Gemäß einer weiteren Ausführungsform kann sich bei einem Verwenden eines Ausgangskondensators bei einem niederohmigen Kurzschluss des Verbrauchers ein hoher Ausgangsstrom I_{OUT} ergeben. Bei einem hochohmigen Kurzschluss kann aufgrund der exponentiellen Entladung des Ausgangskondensators nur wenig elektrische Energie zum Unterbrechen des Signalausgabepfades 105 zur Verfügung stehen. Zum Erhöhen der elektrischen Energie kann ein Ausgangskondensator mit einer entsprechend höheren Kapazität verwendet werden. Die Wiederholbarkeit des Erhöhens 205 des Ausgangsstroms I_{OUT} bzw. der Pulse ist bei Verwenden eines Ausgangskondensators nur aufwändig zu realisieren, da der Ausgangskondensator ohne Beheben der Fehlfunktion 305 bzw. Öffnen des Kurzschlusses nur aufwändig aufgeladen werden kann.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Energieversorgungsgerät
- 101: Ausgang
- 103: Schutzelement
- 105: Signalausgabepfad

- 200: Verfahren
- 201: Erfassen
- 203: Reduzieren
- 205: Erhöhen

- 300: Anordnung
- 301: Leitungswiderstand
- 303: Verbraucher
- 305: Fehlfunktion

- 401: Erster Ausgangsspannungsverlauf
- 403: Zweiter Ausgangsspannungsverlauf
- 405: Dritter Ausgangsspannungsverlauf
- 407: Erster Ausgangsstromverlauf
- 409: Zweiter Ausgangsstromverlauf

- U_{IN}: Versorgungsspannung
- U_{OUT}: Ausgangsspannung
- U_{NOM}: Nominale Ausgangsspannung
- I_{OUT}: Ausgangsstrom
- I₁: Maximaler Ausgangsstrom
- I₂: Nominaler Ausgangsstrom
- t: Zeit
- t₁: Erster Zeitpunkt
- t₂: Zweiter Zeitpunkt

## Patentansprüche

1. Energieversorgungsgerät (100), mit:
einem Ausgang (101) zum Ausgeben eines Ausgangsstroms (I_{OUT}) und einer Ausgangsspannung (U_{OUT}); und
einem Schutzelement (103) mit einem Signalausgabepfad (105), wobei das Schutzelement (103) dem Ausgang (101) nachgeschaltet und ausgebildet ist, bei Überschreitung eines ersten Amplitudenschwellwertes durch den Ausgangsstrom (I_{OUT}) den Signalausgabepfad (105) aufrechtzuerhalten und bei Überschreitung eines zweiten Amplitudenschwellwertes durch den Ausgangsstrom (I_{OUT}) den Signalausgabepfad (105) zu unterbrechen, wobei der zweite Amplitudenschwellwert höher als der erste Amplitudenschwellwert ist;
**dadurch gekennzeichnet, dass** das Energieversorgungsgerät (100) ausgebildet ist, bei Überschreitung des ersten Amplitudenschwellwertes durch den Ausgangsstrom (I_{OUT}) eine Amplitude der Ausgangsspannung (U_{OUT}) zu reduzieren und eine Amplitude des Ausgangsstroms (I_{OUT}) über den zweiten Amplitudenschwellwert zu erhöhen, um den Signalausgabepfad (105) zu unterbrechen.

2. Energieversorgungsgerät (100) nach Anspruch 1, wobei das Energieversorgungsgerät (100) ausgebildet ist, die Amplitude der Ausgangsspannung (U_{OUT}) nach der Reduktion zu erhöhen, wenn die Amplitude des Ausgangsstroms (I_{OUT}) nach Ablauf einer vorbestimmten Zeitspanne einen dritten Amplitudenschwellwert unterschreitet.

3. Energieversorgungsgerät (100) nach Anspruch 1 oder 2, wobei das Energieversorgungsgerät (100) ausgebildet ist, die Amplitude der Ausgangsspannung (U_{OUT}) erneut zu reduzieren, wenn die Amplitude des Ausgangsstroms (I_{OUT}) nach Ablauf der vorbestimmten Zeitspanne den dritten Amplitudenschwellwert überschreitet.

4. Energieversorgungsgerät (100) nach einem der vorstehenden Ansprüche, mit einer Erfassungseinrichtung zum Erfassen der Amplitude des Ausgangsstroms (I_{OUT}).

5. Energieversorgungsgerät (100) nach einem der vorstehenden Ansprüche, mit einer Steuereinrichtung zum Einstellen der Amplitude des Ausgangsstroms (I_{OUT}) oder der Amplitude der Ausgangsspannung (U_{OUT}).

6. Energieversorgungsgerät (100) nach einem der vorstehenden Ansprüche, wobei das Schutzelement (103) einen Leitungsschutzschalter, insbesondere einen Leitungsschutzschalter mit elektromagnetischer Auslösung, umfasst.

7. Energieversorgungsgerät (100) nach einem der vorstehenden Ansprüche, wobei das Schutzelement (103) eine Schmelzsicherung umfasst.

8. Energieversorgungsgerät (100) nach einem der vorstehenden Ansprüche, wobei das Schutzelement (103) einen Kaltleiter-Widerstand umfasst.

9. Energieversorgungsgerät (100) nach einem der vorstehenden Ansprüche, wobei das Schutzelement (103) in einem Gehäuse des Energieversorgungsgerätes (100) angeordnet ist, und wobei dem Schutzelement (103) ein weiterer Ausgang zum Ausgeben des Ausgangsstroms (I_{OUT}) und der Ausgangsspannung (U_{OUT}) nachgeschaltet ist, wobei der Signalausgabepfad (105) zwischen dem Ausgang (101) und dem weiteren Ausgang angeordnet ist.

10. Energieversorgungsgerät (100) nach einem der vorstehenden Ansprüche, wobei der jeweilige Amplitudenschwellwert mittels einer Benutzerschnittstelle einstellbar oder vorgespeichert ist.

11. Energieversorgungsgerät (100) nach Anspruch 10, wobei die Benutzerschnittstelle eine Kommunikationsschnittstelle oder ein Betätigungselement zum Einstellen des jeweiligen Amplitudenschwellwertes umfasst.

12. Energieversorgungsgerät (100) nach einem der vorstehenden Ansprüche, wobei das Energieversorgungsgerät (100) ausgebildet ist, die Amplitude der Ausgangsspannung (U_{OUT}) oder die Amplitude des Ausgangsstroms (I_{OUT}) auf der Basis eines Amplitudenwertes einer Versorgungsspannung (U_{IN}) des Energieversorgungsgerätes (100) einzustellen, um die elektrische Leistungsaufnahme des Energieversorgungsgerätes (100) zu reduzieren.

13. Verfahren (200) zum Versorgen eines Verbrauchers (303) mit elektrischer Energie mittels eines Energieversorgungsgerätes (100), wobei einem Ausgang (101) des Energieversorgungsgerätes (100) zum Ausgeben eines Ausgangsstroms (I_{OUT}) und einer Ausgangsspannung (U_{OUT}) ein Schutzelement (103) mit einem Signalausgabepfad (105) nachgeschaltet ist, wobei das Schutzelement (103) ausgebildet ist, bei Überschreitung eines ersten Amplitudenschwellwertes durch den Ausgangsstrom (I_{OUT}) den Signalausgabepfad (105) aufrechtzuerhalten und bei Überschreitung eines zweiten Amplitudenschwellwertes durch den Ausgangsstrom (I_{OUT}) den Signalausgabepfad (105) zu unterbrechen, wobei der zweite Amplitudenschwellwert höher als der erste Amplitudenschwellwert ist, mit:
Erfassen (201) einer Amplitude des Ausgangsstroms (I_{OUT}); und
Reduzieren (203) einer Amplitude der Ausgangsspannung (U_{OUT}) und Erhöhen (205) der Amplitude des Ausgangsstroms (I_{OUT}) über den zweiten Amplitudenschwellwert bei Überschreitung des ersten Amplitudenschwellwertes durch den Ausgangsstrom (I_{OUT}), um den Signalausgabepfad (105) zu unterbrechen.

14. Verfahren (200) nach Anspruch 13, mit:
Erhöhen der Amplitude der Ausgangsspannung (U_{OUT}), wenn die Amplitude des Ausgangsstroms (I_{OUT}) nach Ablauf einer vorbestimmten Zeitspanne einen dritten Amplitudenschwellwert unterschreitet.

15. Verfahren (200) nach Anspruch 13 oder 14, mit:
erneutem Reduzieren der Amplitude der Ausgangsspannung (U_{OUT}), wenn die Amplitude des Ausgangsstroms (I_{OUT}) nach Ablauf der vorbestimmten Zeitspanne den dritten Amplitudenschwellwert überschreitet.

## Claims

1. Energy supply unit (100), comprising:
an output (101) for outputting an output current (I_{OUT}) and an output voltage (U_{OUT}); and
a protection element (103) comprising a signal output path (105), wherein the protection element (103) is connected downstream of the output (101) and is configured to maintain the signal output path (105) when a first amplitude threshold value is exceeded by the output current (I_{OUT}) and to interrupt the signal output path (105) when a second amplitude threshold value is exceeded by the output current (I_{OUT}), wherein the second amplitude threshold value is higher than the first amplitude threshold value;
**characterized in that** the energy supply unit (100) is configured to reduce an amplitude of the output voltage (U_{OUT}) and to increase an amplitude of the output current (I_{OUT}) above the second amplitude threshold value when the first amplitude threshold value is exceeded by the output current (I_{OUT}) in order to interrupt the signal output path (105).

2. Energy supply unit (100) according to Claim 1, wherein the energy supply unit (100) is configured to increase the amplitude of the output voltage (U_{OUT}) after the reduction when the amplitude of the output current (I_{OUT}) undershoots a third amplitude threshold value after a predetermined period of time has elapsed.

3. Energy supply unit (100) according to Claim 1 or 2, wherein the energy supply unit (100) is configured to reduce the amplitude of the output voltage (U_{OUT}) again when the amplitude of the output current (I_{OUT}) exceeds the third amplitude threshold value after the predetermined period of time has elapsed.

4. Energy supply unit (100) according to one of the preceding claims, comprising a detection device for detecting the amplitude of the output current (I_{OUT}).

5. Energy supply unit (100) according to one of the preceding claims, having a control device for setting the amplitude of the output current (I_{OUT}) or the amplitude of the output voltage (U_{OUT}).

6. Energy supply unit (100) according to one of the preceding claims, wherein the protection element (103) comprises a line circuit breaker, in particular a line circuit breaker with electromagnetic tripping.

7. Energy supply unit (100) according to one of the preceding claims, wherein the protection element (103) comprises a fusible link.

8. Energy supply unit (100) according to one of the preceding claims, wherein the protection element (103) comprises a PTC resistor.

9. Energy supply unit (100) according to one of the preceding claims, wherein the protection element (103) is arranged in a housing of the energy supply unit (100), and wherein a further output for outputting the output current (I_{OUT}) and the output voltage (U_{OUT}) is connected downstream of the protection element (103), wherein the signal output path (105) is arranged between the output (101) and the further output.

10. Energy supply unit (100) according to one of the preceding claims, wherein the respective amplitude threshold value is able to be set or is prestored by means of a user interface.

11. Energy supply unit (100) according to Claim 10, wherein the user interface comprises a communication interface or an activation element for setting the respective amplitude threshold value.

12. Energy supply unit (100) according to one of the preceding claims, wherein the energy supply unit (100) is configured to set the amplitude of the output voltage (U_{OUT}) or the amplitude of the output current (I_{OUT}) on the basis of an amplitude value of a supply voltage (U_{IN}) of the energy supply unit (100) in order to reduce the electrical power consumption of the energy supply unit (100) .

13. Method (200) for supplying electrical energy to a consumer (303) by means of an energy supply unit (100), wherein a protection element (103) having a signal output path (105) is connected downstream of an output (101) of the energy supply unit (100) for outputting an output current (I_{OUT}) and an output voltage (U_{OUT}), wherein the protection element (103) is configured to maintain the signal output path (105) when a first amplitude threshold value is exceeded by the output current (I_{OUT}) and to interrupt the signal output path (105) when a second amplitude threshold value is exceeded by the output current (I_{OUT}), wherein the second amplitude threshold value is higher than the first amplitude threshold value, comprising:
detecting (201) an amplitude of the output current (I_{OUT}); and
reducing (203) an amplitude of the output voltage (U_{OUT}) and increasing (205) the amplitude of the output current (I_{OUT}) above the second amplitude threshold value when the first amplitude threshold value is exceeded by the output current (I_{OUT}) in order to interrupt the signal output path (105).

14. Method (200) according to Claim 13, comprising:
increasing the amplitude of the output voltage (U_{OUT}) when the amplitude of the output current (I_{OUT}) undershoots a third amplitude threshold value after a predetermined period of time has elapsed.

15. Method (200) according to Claim 13 or 14, comprising:
reducing the amplitude of the output voltage (U_{OUT}) again when the amplitude of the output current (I_{OUT}) exceeds the third amplitude threshold value after the predetermined period of time has elapsed.

## Revendications

1. Unité d'alimentation en énergie (100), comprenant :
une sortie (101) destinée à délivrer un courant de sortie (I_{OUT}) et une tension de sortie (U_{OUT}) ; et
un élément de protection (103) pourvu d'un chemin de sortie de signal (105), l'élément de protection (103) étant monté en aval de la sortie (101) et conçu pour maintenir le chemin de sortie de signal (105) si un premier seuil d'amplitude est dépassé par le courant de sortie (I_{OUT}) et pour interrompre le chemin de sortie de signal (105) si un deuxième seuil d'amplitude est dépassé par le courant de sortie (I_{OUT}), le deuxième seuil d'amplitude étant supérieur au premier seuil d'amplitude ;
**caractérisée en ce que** l'unité d'alimentation en énergie (100) est adaptée pour réduire l'amplitude de la tension de sortie (U_{OUT}) lorsque le premier seuil d'amplitude est dépassé par le courant de sortie (I_{OUT}) et pour augmenter l'amplitude du courant de sortie (I_{OUT}) au-delà du deuxième seuil d'amplitude pour interrompre le chemin de sortie de signal (105).

2. Unité d'alimentation en énergie (100) selon la revendication 1, l'unité d'alimentation en énergie (100) étant conçue pour augmenter l'amplitude de la tension de sortie (U_{OUT}) après la réduction lorsque l'amplitude du courant de sortie (I_{OUT}) est inférieure à un troisième seuil d'amplitude après un laps de temps prédéterminé.

3. Unité d'alimentation en énergie (100) selon la revendication 1 ou 2, l'unité d'alimentation en énergie (100) étant conçue pour réduire à nouveau l'amplitude de la tension de sortie (U_{OUT}) lorsque l'amplitude du courant de sortie (I_{OUT}) dépasse la troisième valeur de seuil d'amplitude après un laps de temps prédéterminé.

4. Unité d'alimentation en énergie (100) selon l'une des revendications précédentes, comprenant un dispositif de détection destiné à détecter l'amplitude du courant de sortie (I_{OUT}).

5. Unité d'alimentation en énergie (100) selon l'une des revendications précédentes, comprenant un dispositif de commande destiné à régler l'amplitude du courant de sortie (I_{OUT}) ou l'amplitude de la tension de sortie (U_{OUT}).

6. Unité d'alimentation en énergie (100) selon l'une des revendications précédentes, l'élément de protection (103) comprenant un disjoncteur, en particulier un disjoncteur à déclenchement électromagnétique.

7. Unité d'alimentation en énergie (100) selon l'une des revendications précédentes, l'élément de protection (103) comprenant un fusible.

8. Unité d'alimentation en énergie (100) selon l'une des revendications précédentes, l'élément de protection (103) comprenant une résistance CTP.

9. Unité d'alimentation en énergie (100) selon l'une des revendications précédentes, l'élément de protection (103) étant disposé dans un boîtier de l'unité d'alimentation en énergie (100), et une autre sortie destinée à délivrer le courant de sortie (I_{OUT}) et la tension de sortie (U_{OUT}) étant montée en aval de l'élément de protection (103), le chemin de sortie de signal (105) étant disposé entre la sortie (101) et l'autre sortie.

10. Unité d'alimentation en énergie (100) selon l'une des revendications précédentes, le seuil d'amplitude respectif étant réglable ou mémorisé à l'avance au moyen d'une interface utilisateur.

11. Unité d'alimentation en énergie (100) selon la revendication 10, l'interface utilisateur comprenant une interface de communication ou un élément d'actionnement destiné à régler le seuil d'amplitude respectif.

12. Unité d'alimentation en énergie (100) selon l'une des revendications précédentes, **caractérisée en ce que** l'unité d'alimentation en énergie (100) est conçue pour régler l'amplitude de la tension de sortie (U_{OUT}) ou l'amplitude du courant de sortie (I_{OUT}) sur la base d'une valeur d'amplitude d'une tension d'alimentation (U_{IN}) de l'unité d'alimentation en énergie (100) afin de réduire la consommation électrique de l'unité d'alimentation en énergie (100).

13. Procédé (200) d'alimentation en énergie électrique d'un consommateur (303) au moyen d'une unité d'alimentation en énergie (100), un élément de protection (103) pourvu d'un chemin de sortie de signal (105) étant monté en aval d'une sortie (101) de l'unité d'alimentation en énergie (100) destinée à délivrer un courant de sortie (I_{OUT}) et une tension de sortie (U_{OUT}), l'élément de protection (103) étant conçu pour maintenir le chemin de sortie de signal (105) si un premier seuil d'amplitude est dépassé par le courant de sortie (I_{OUT}) et pour interrompre le chemin de sortie de signal (105) si un deuxième seuil d'amplitude est dépassé par le courant de sortie (I_{OUT}), le deuxième seuil d'amplitude étant supérieur au premier seuil d'amplitude, le procédé comprenant les étapes suivantes :
détecter (201) une amplitude du courant de sortie (I_{OUT}) ; et
réduire (203) une amplitude de la tension de sortie (U_{OUT}) et augmenter (205) l'amplitude du courant de sortie (I_{OUT}) au-delà du deuxième seuil d'amplitude lorsque le premier seuil d'amplitude est dépassé par le courant de sortie (I_{OUT}) afin d'interrompre le chemin de sortie de signal (105).

14. Procédé (200) selon la revendication 13, comprenant l'étape suivante :
augmenter l'amplitude de la tension de sortie (U_{OUT}) lorsque l'amplitude du courant de sortie (I_{OUT}) tombe au-dessous d'un troisième seuil d'amplitude au bout d'un laps de temps prédéterminé.

15. Procédé (200) selon la revendication 13 ou 14, comprenant l'étape de suivante :
réduire à nouveau l'amplitude de la tension de sortie (U_{OUT}) lorsque l'amplitude du courant de sortie (I_{OUT}) dépasse le troisième seuil d'amplitude au bout d'un laps de temps prédéterminé.
